# EUROPÄISCHE PATENTSCHRIFT

(11) **EP 3 308 055 B1**
(45) Veröffentlichungstag und Bekanntmachung des Hinweises auf die Patenterteilung: **05.02.2020**
(21) Anmeldenummer: 16724592.7
(22) Anmeldetag: 24.05.2016
(51) Int. Cl.: F16H 3/54, F16H 3/72, F16H 13/06, F16H 37/08

(54) **GETRIEBE MIT EINEM GEHÄUSE UND EINER PLANETENGETRIEBESTUFE**
GEARING HAVING A HOUSING AND A PLANETARY GEARING STAGE
TRANSMISSION POURVUE D'UN CARTER ET D'UN ENGRENAGE PLANÉTAIRE

(30) Priorität: 12.06.2015 DE 102015007333
(43) Veröffentlichungstag der Anmeldung: 18.04.2018
(73) Patentinhaber: SEW-EURODRIVE GmbH & Co. KG, 76646 Bruchsal (DE)
(72) Erfinder: DOLEJS, Jirí, 253 01 Hostivice (CZ)
(86) Internationale Anmeldenummer: PCT/EP2016/000855
(87) Internationale Veröffentlichungsnummer: WO 2016/198146

(56) Entgegenhaltungen:
- EP-A2- 1 605 185
- WO-A2-2009/129966
- DE-A1- 19 824 866
- DE-A1-102008 052 546
- DE-B- 1 295 297
- GB-A- 1 579 380

## Beschreibung

Die Erfindung betrifft ein Getriebe mit einem Gehäuse und einer Planetengetriebestufe.

Es ist allgemein bekannt, dass das Hohlrad einer Planetengetriebestufe innenverzahnt ist und mit den Planetenrädern im Eingriff ist, also kämmt.

Aus der GB 1 579 380 A ist ein Planetengetriebe mit einer Hilfswelle bekannt.

Aus der WO 2009 / 129966 A2 ist als nächstliegender Stand der Technik eine Differentialgetriebevorrichtung bekannt.

Aus der DE 1 295 297 B ist ein Summierungsgetriebe mit Zweimotorenantrieb bekannt.

Aus der DE 10 2008 052 546 A1 ist ein Getriebemotor bekannt, der von zwei Motoren antreibbar ist.

Aus der DE 198 24 866 A1 ist ein Getriebe für einen Doppelwellenextruder bekannt.

Aus der EP 1 605 185 A2 ist ein Planetengetriebe mit kontinuierlicher variabler Übertragung bekannt.

Der Erfindung liegt daher die Aufgabe zugrunde, ein Getriebe mit variablem Übersetzungsverhältnis weiterzubilden.

Erfindungsgemäß wird die Aufgabe bei dem Getriebe nach den in Anspruch 1 angegebenen Merkmalen gelöst.

Wichtige Merkmale der Erfindung bei dem Getriebe mit einem Gehäuse und einer Planetengetriebestufe, aufweisend zumindest ein Hohlrad mit Außenverzahnung und Innenverzahnung,
wobei eine oder mehrere Hilfswellen am Gehäuse des Getriebes drehbar gelagert sind und eine Verzahnung aufweisen oder mit einer Verzahnungsteil drehfest verbunden sind,
wobei die Verzahnung oder das Verzahnungsteil mit der Außenverzahnung des Hohlrades im Eingriff sind.

Von Vorteil ist dabei, dass durch Antrieben der Hilfswellen eine Einstellung des Übersetzungsverhältnisses der Planetengetriebestufe bewirkbar ist.

Erfindungsgemäß ist die Achse der Hilfswelle oder Hilfswellen parallel zur Achse des Hohlrades ausgerichtet. Von Vorteil ist dabei, dass eine einfache Herstellung ermöglicht ist.

Erfindungsgemäß ist eine eintreibende Welle des Getriebes mit einem Sonnenrad der Planetengetriebestufe drehfest verbunden,
wobei ein oder mehrere Planetenräder der Planetengetriebestufe jeweils einerseits mit der Innenverzahnung des Hohlrades im Eingriff sind und andererseits mit dem Sonnenrad. Von Vorteil ist dabei, dass die Planetengetriebestufe in einfacher Weise herstellbar ist.

Erfindungsgemäß ist das jeweilige Planetenrad mittels Lager auf einem Bolzen drehbar gelagert, welcher mit einem als Abtriebswelle fungierenden Planetenträger verbunden, insbesondere steckverbunden, ist. Von Vorteil ist dabei, dass die Planetengetriebestufe in einfacher Weise herstellbar ist.

Erfindungsgemäß ist das Sonnenrad zumindest teilweise in eine Bohrung der eintreibenden Welle eingesteckt und das Sonnenrad weist einen Verzahnungsbereich auf, welcher mit einer in der Bohrung eingebrachten Innenverzahnung im Eingriff steht zur Bildung einer formschlüssigen drehfesten Verbindung zwischen Sonnenrad und eintreibender Welle. Von Vorteil ist dabei, dass eine kompakte Ausführung herstellbar ist.

Erfindungsgemäß ist das Hohlrad mittels Lager auf dem Planetenträger drehbar gelagert,
wobei die Innenringe der Lager auf den Planetenträger aufgesteckt sind und die Außenringe der Lager ins Hohlrad eingesteckt sind. Von Vorteil ist dabei, dass das Hohlrad drehbar gelagert ist und somit das Übersetzungsverhältnis einstellbar ist.

Bei einer vorteilhaften Ausführung ist die eintreibende Welle mittels eines ersten Lagers, welches im Gehäuse aufgenommen ist, und mittels eines zweiten Lagers, welches im Planetenträger aufgenommen ist, gelagert,
insbesondere wobei das zweite Lager in einer Bohrung des Planetenträgers angeordnet ist,
insbesondere wobei der Innenring des ersten und der Innenring des zweiten Lagers auf die eintreibende Welle aufgesteckt ist. Von Vorteil ist dabei, dass das Getriebe sehr kompakt ausführbar ist.

Bei einer vorteilhaften Ausführung ist der Planetenträger beidseitig durch im Gehäuse aufgenommene Lager drehbar gelagert. Von Vorteil ist dabei, dass ein hohes Quermoment auf der Lastseite aufnehmbar ist.

Bei einer vorteilhaften Ausführung sind die Lager der Hilfswellen Schräglager, insbesondere angestellte Schräglager. Von Vorteil ist dabei, dass hohe Quermomente aufnehmbar sind und somit ein sehr stabiles Getriebe erreicht ist.

Bei einer nicht beanspruchten Ausführung sind statt der verzahnten Teile Reibteile verwendet, insbesondere also im Eingriff miteinander sich befindende Verzahnungsteile durch Reibräder ersetzt sind. Von Vorteil ist dabei, dass die Herstellung von Verzahnungen einsparbar ist.

Bei einer vorteilhaften Ausführung ist jede Hilfswelle von einem jeweiligen Elektromotor antreibbar und die eintreibenden Welle ist von einem weiteren Elektromotor antreibbar. Von Vorteil ist dabei, dass mittels der Hilfswellen ein entsprechendes Übersetzungsverhältnis in einfacher Weise und elektronisch geregelt einstellbar ist.

Bei einer vorteilhaften Ausführung umgibt das Gehäuse die Verzahnung der Hilfswellen und das Hohlrad gehäusebildend. Von Vorteil ist dabei, dass die Hilfswellen mit dem Hohlrad geschützt sind und durch das Schmiermittel des Getriebes nicht nur die Planetengetriebestufe, sondern auch dieser Verzahnungseingriff schmierbar ist.

Bei einer vorteilhaften Ausführung ist die jeweilige Verzahnung der Hilfswellen geteilt ausgeführt,
wobei axial zwischen den Teilen dieser jeweiligen Verzahnung die jeweilige Hilfswelle und/oder das Hohlrad eine Vertiefung, insbesondere eine Ringnut, aufweist. Von Vorteil ist dabei, dass das Herausquetschen des Schmieröls aus dem Eingriffsberiech der Verzahnungen in einfacher Weise, also ohne besonderen Widerstand ausführbar ist.

Die Erfindung wird nun anhand von Abbildungen näher erläutert:
In der Figur 1 ist ein Querschnitt durch ein erfindungsgemäßes Getriebe dargestellt.
In der Figur 2 ist eine Schrägansicht auf im Eingriff sich befindende Verzahnungsteile des Getriebes dargestellt.
In der Figur 3 ist eine Schrägansicht auf das Getriebe dargestellt.
Figur 4 zeigt einen vergrößerten Ausschnitt der Figur 1.

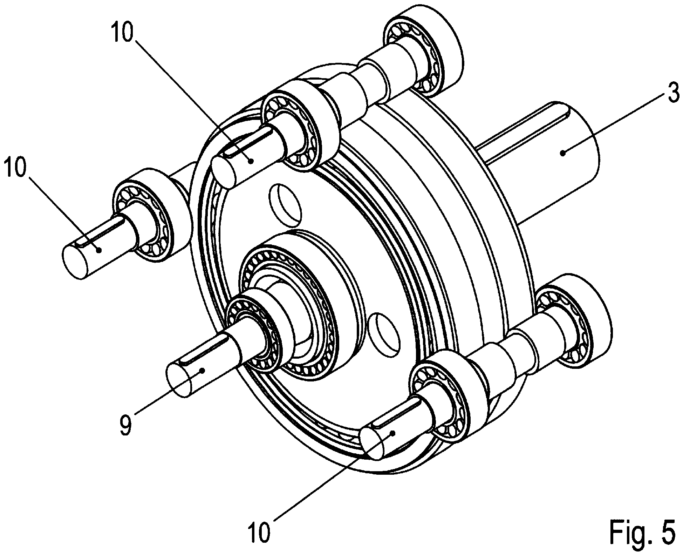

In der Figur 5 ist eine Schrägansicht für ein weiteres nicht beanspruchtes Ausführungsbeispiel auf statt der im Eingriff sich befindenden Verzahnungsteile nach Figur 2 im Reibkontakt sich befindende Reibräder dargestellt.

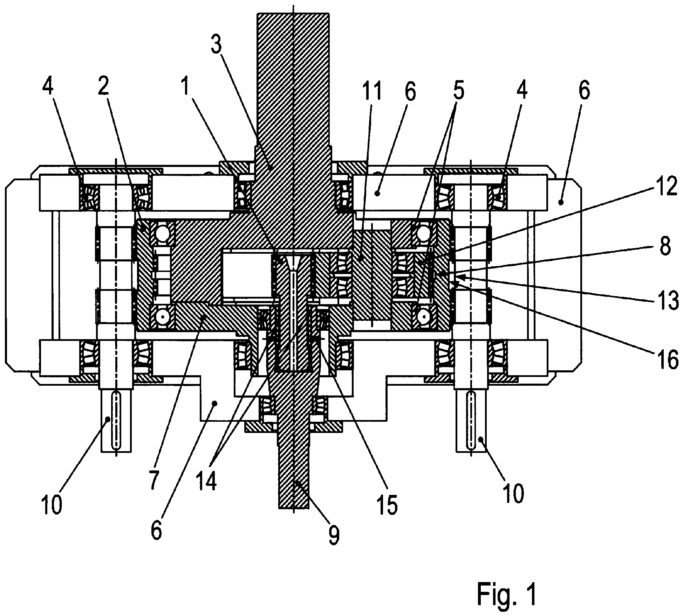

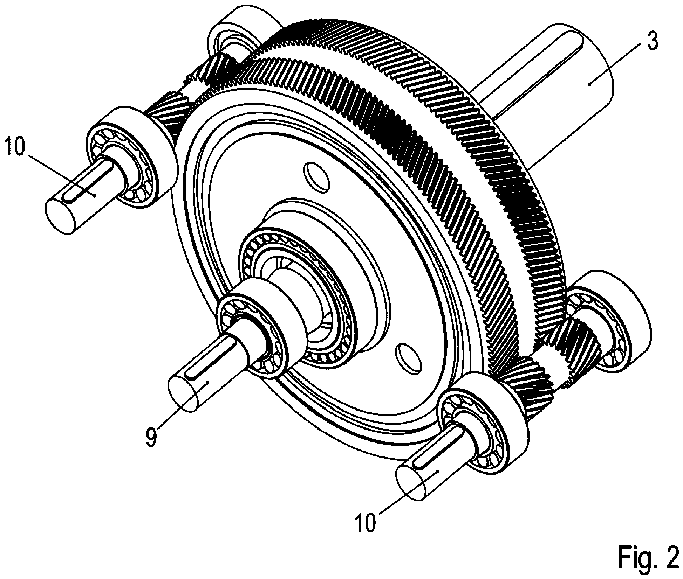

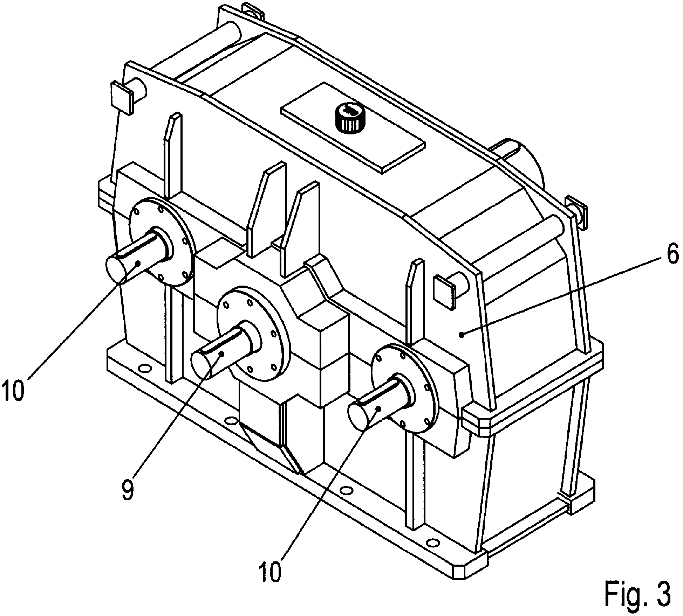

Wie in den Figuren 1 bis 3 gezeigt, weist das Getriebe ein mehrteiliges Gehäuse 6 auf, in welchem ein erstes Lager der eintreibenden Welle 9 des Getriebes aufgenommen ist.

Die eintreibende Welle 9 ist drehfest verbunden mit einem Sonnenrad 1, welches eine mit Planetenrädern im Eingriff sich befindende Sonnenradverzahnung aufweist und davon axial beabstandet eine Außenverzahnung, welche im Eingriff steht mit einer in einer Bohrung der eintreibenden Welle 9 angeordneten Innenverzahnung.

Somit ist die eintreibende Welle 9 drehfest verbunden mit dem Sonnenrad 1. Dabei ist das Sonnenrad 1 zumindest teilweise eingesteckt in die Bohrung. Die Bohrung ist hierbei als Sacklochbohrung ausgeführt und weist die Innenverzahnung zumindest im Endbereich der Sacklochbohrung auf, also an dem von der Mündung der Sacklochbohrung abgewandten Endbereich.

Die Planetenräder sind drehbar gelagert relativ zum Planetenträger 3, 7. Hierzu sind mit dem Planetenträger 3, 7 Bolzen 11 verbunden, insbesondere in axialer Richtung eingesteckt. Auf jeden der Bolzen 11 sind jeweils zwei Lager aufgesteckt, wobei auf die Lager, insbesondere auf die Außenringe der Lager, jeweils ein Planetenrad 12 aufgesteckt ist, das nach radial innen gerichtet mit der Sonnenradverzahnung im Eingriff sich befindet und nach radial außen mit der Innenverzahnung eines Hohlrades 2. Dabei weist das Hohlrad 2 nicht nur eine Innenverzahnung auf, sondern auch eine Außenverzahnung. Das Hohlrad 2 ist also ringförmig ausgeführt mit Innenverzahnung und Außenverzahnung.

Der Planetenträger ist aus zwei miteinander schraubverbundenen Teilen 3 und 7 ausgeführt, insbesondere also zweiwangig ausgeführt.

Das Hohlrad 2 ist auf dem Planetenträger 3, 7 gelagert. Der Planetenträger 3, 7 ist aus zwei Teilen zusammengesetzt und somit zweiwangig ausgeführt. Hierzu ist der Innenring eines ersten Lagers, insbesondere Kugellagers, auf einem ersten Teil 3 des Planetenträgers 3, 7 aufgesteckt, insbesondere drehfest verbunden, und der Außenring des ersten Lagers ist im Hohlrad 2 aufgenommen. Ebenso ist der Innenring des anderen, also zweiten, Lagers, insbesondere Kugellagers, auf dem zweiten Teil 7 des Planetenträgers 3, 7 aufgesteckt,
insbesondere drehfest verbunden, und der Außenring des zweiten Lagers ist im Hohlrad 2 aufgenommen.

Die Innenverzahnung des Hohlrades 2 ist axial zwischen den Außenringen des ersten und zweiten Lagers angeordnet.

Axial mittig in der Innenverzahnung des Hohlrades 2 ist eine Ringnut 8 ausgeführt, so dass die Innenverzahnung zweigeteilt ausgeführt ist. Dabei ist die Ringnut 8 tiefer als der Fußkreis der Innenverzahnung des Hohlrades 2 ausgeführt. Somit ist also der größte Innendurchmesser des Hohlrades 2 im Bereich der Ringnut 8 größer als der größte Fußkreisdurchmesser der Innenverzahnung.

Die Innenverzahnung und die Außenverzahnung des Hohlrades 2 sind vorteiligerweise als Evolventenverzahnungen ausgeführt.

Ebenso sind die Verzahnungen des jeweiligen Planetenrads 12 zweigeteilt ausgeführt, wobei wiederum eine Ringnut axial zwischen den Teilen der Verzahnungen des jeweiligen Planetenrads 12 vorsehbar ist, deren kleinster Durchmesser kleiner ist als der kleinste Fußkreisdurchmesser der Verzahnung des jeweiligen Planetenrads 12. Mittels der zweigeteilten Ausführung samt Ringnut 8 im Hohlrad 2 ist das Herausquetschen von Schmieröl aus dem Eingriffsbereich in einfacher Weise ermöglicht.

Ebenso ist die Außenverzahnung des Hohlrades 2 zweigeteilt ausgeführt, wobei eine Vertiefung 16, insbesondere Ringnut, axial zwischen den Teilbereichen der Außenverzahnung angeordnet ist. Dabei ist der kleinste Durchmesser der Ringnut 16 kleiner als der kleinste Fußkreisdurchmesser der Verzahnung des Hohlrads 2.

Im Gehäuse sind auch Lager 4 aufgenommen, so dass zwei oder mehr Hilfswellen 10 im Gehäuse drehbar gelagert sind. Diese Hilfswellen 10 weisen ebenfalls eine zweigeteilte Verzahnung auf, also jeweils einen ersten Verzahnungsbereich und einen davon axial beabstandeten zweiten Verzahnungsbereich. Im Beabstandungsbereich ist wiederum eine Ringnut 13 vorgesehen, deren kleinster Durchmesser kleiner ist als der kleinste Fußkreisdurchmesser der Verzahnungen der Hilfswellen 10. Die Achsen der Hilfswellen 10 sind parallel zur Achse des Hohlrades 2 sowie parallel zur Achse der eintreibenden Welle 9 und/oder zur Achse des abtreibenden Planetenträgers 3 ausgerichtet.

Diese Verzahnung der Hilfswellen 10 ist jeweils im Eingriff mit der Außenverzahnung des Hohlrades 2, so dass durch Antreiben der Hilfswellen 10 eine Drehbewegung des Hohlrades 2 ausführbar ist. Auf diese Weise ist das Übersetzungsverhältnis der oben beschrieben Planetengetriebestufe beeinflussbar und entsprechend veränderbar.

Wie oben beschrieben, ist die eintreibende Welle 9 mittels eines ersten Lagers im Gehäuse gelagert und mittels eines weiteren Lagers an dem zweiten Teil 7 des Planetenträgers (3, 7). Hierzu ist der Außenring in einer Bohrung des zweiten Teils 7 aufgenommen und der Innenring des weiteren Lagers auf die eintreibende Welle aufgeschoben. Somit ist das weitere Lager auf einem kleineren Durchmesser angeordnet als das erste Lager.

Die Hilfswellen 10 befinden sich radial außerhalb des Hohlrades 2, wobei die Verzahnungen im Eingriff sind, also die Verzahnungen der Hilfswellen und die Außenverzahnung des Hohlrades 2 sich berühren.

Zur Erreichung eines kontrollierten Kippfreiheitsgrades des Sonnenrades 1 ist dessen der eintreibenden Welle 9 zugewandte Stirnseite 20 konvex gekrümmt ausgeführt.

Zum Kontrollieren des axialen Freiheitsgrades des Sonnenrades 1 ist eine Buchse 14 in der Bohrung der eintreibenden Welle 9 eingeschoben, wobei das Sonnenrad 1 durch die Buchse 14 hindurchgeführt ist. Die Buchse 14 ist mittels in die Bohrung 15 eingeschraubter Schraubteile befestigbar in der eintreibenden Welle. Insbesondere sind hier radial gerichtete Schraubteile, wie Gewindestifte oder dergleichen, verwendbar, welche radial gerichtet auf die Buchse 14 drücken und somit eine kraftschlüssige Verbindung bewirken.

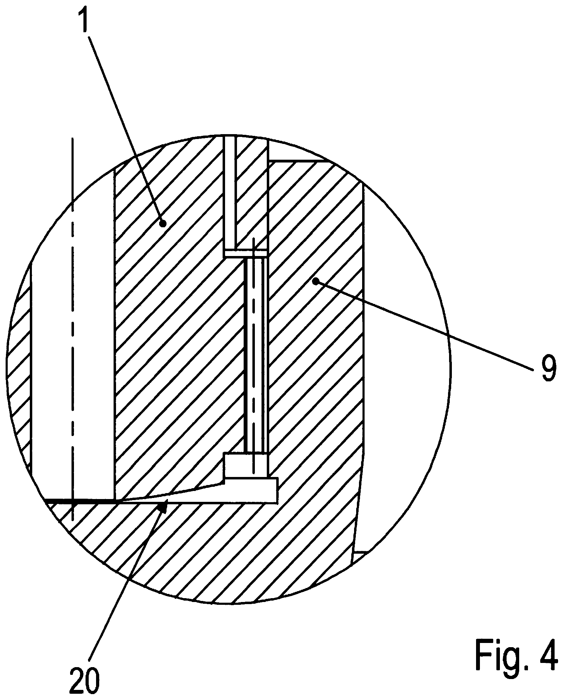

In Figur 4 ist die konvex gekrümmte Stirnseite 20 näher dargestellt.

Zum Kontrollieren des radialen Freiheitsgrades des Sonnenrades 1 ist der zunehmende Freiraum zwischen dem Evolventenprofil der Innenverzahnung der eintreibenden Welle 9 und der entsprechend im Eingriff stehenden Außenverzahnung des Sonnenrades 1 zur formschlüssigen Verbindung vorgesehen.

### Bezugszeichenliste

1 Sonnenrad
2 Hohlrad mit Innenverzahnung und Außenverzahnung
3 erstes Teil, insbesondere Wange, des Planetenträgers
4 Lager für Hilfswelle 10
5 Lager
6 Gehäuse
7 zweites Teil, insbesondere Wange, des Planetenträgers
8 Ausnehmung, insbesondere Ringnut
9 eintreibende Welle
10 Hilfswelle
11 Bolzen
12 Planetenrad
13 Ausnehmung, insbesondere Ringnut in Hilfswelle 10
14 Buchse
15 Bohrung
16 Ausnehmung, insbesondere Ringnut in Hohlrad 2
20 konvex gekrümmte Stirnseite des Sonnenrades 1

## Patentansprüche

1. Getriebe mit einem Gehäuse (6) und einer Planetengetriebestufe, aufweisend zumindest ein Hohlrad (2) mit Außenverzahnung und Innenverzahnung,
wobei eine oder mehrere Hilfswellen (10) am Gehäuse (6) des Getriebes drehbar gelagert sind und eine Verzahnung aufweisen oder mit einem Verzahnungsteil drehfest verbunden sind,
wobei jede Verzahnung oder jedes Verzahnungsteil mit der Außenverzahnung des Hohlrades (2) im Eingriff ist,
wobei die Achse der Hilfswelle (10) oder jeder Hilfswelle (10) parallel zur Achse des Hohlrades (2) ausgerichtet ist,
wobei eine eintreibende Welle (9) des Getriebes mit einem Sonnenrad (1) der Planetengetriebestufe drehfest verbunden ist,
wobei ein oder mehrere Planetenräder (12) der Planetengetriebestufe jeweils einerseits mit der Innenverzahnung des Hohlrades (2) und andererseits mit dem Sonnenrad (1) im Eingriff sind;
wobei das jeweilige Planetenrad (12) mittels Lager auf einem Bolzen (11) drehbar gelagert ist, welcher mit einem als Abtriebswelle fungierenden Planetenträger verbunden, insbesondere steckverbunden, ist,
wobei das Sonnenrad (1) zumindest teilweise in eine Bohrung (15) der eintreibenden Welle (9) eingesteckt ist und das Sonnenrad (1) einen Verzahnungsbereich aufweist, welcher mit einer in der Bohrung (15) eingebrachten Innenverzahnung im Eingriff steht zur Bildung einer formschlüssigen drehfesten Verbindung zwischen Sonnenrad (1) und eintreibender Welle (9),
wobei das Hohlrad (2) mittels Lager (5) auf dem Planetenträger drehbar gelagert ist,
wobei die Innenringe dieser Lager (5) auf den Planetenträger aufgesteckt sind und die Außenringe dieser Lager (5) ins Hohlrad (2) eingesteckt sind,
**dadurch gekennzeichnet, dass**
zur Erreichung eines kontrollierten Kippfreiheitsgrades des Sonnenrades (1) die der eintreibenden Welle (9) zugewandte Stirnseite (20) des Sonnenrades (1) konvex gekrümmt ausgeführt ist,
dass zum Kontrollieren des axialen Freiheitsgrades des Sonnenrades (1) eine Buchse (14) in der Bohrung (15) der eintreibenden Welle (9) eingeschoben ist, wobei das Sonnenrad (1) durch die Buchse (14) hindurchgeführt ist und die Buchse (14) mittels in die Bohrung (15) eingeschraubter Schraubteile in der eintreibenden Welle (9) befestigt ist,
und dass zum Kontrollieren des radialen Freiheitsgrades des Sonnenrades (1) ein zunehmender Freiraum zwischen dem Evolventenprofil der Innenverzahnung der eintreibenden Welle (9) und dem Verzahnungsbereich des Sonnenrades (1) vorgesehen ist.

2. Getriebe nach Anspruch 1,
**dadurch gekennzeichnet, dass**
die eintreibende Welle (9) mittels eines ersten Lagers, welches im Gehäuse (6) aufgenommen ist, und mittels eines zweiten Lagers, welches im Planetenträger aufgenommen ist, gelagert ist, insbesondere wobei das zweite Lager in einer Bohrung des Planetenträgers angeordnet ist, insbesondere wobei der Innenring des ersten und der Innenring des zweiten Lagers auf die eintreibende Welle (9) aufgesteckt ist.

3. Getriebe nach mindestens einem der vorangegangenen Ansprüche,
**dadurch gekennzeichnet, dass**
der Planetenträger beidseitig durch im Gehäuse (6) aufgenommene Lager drehbar gelagert ist.

4. Getriebe nach mindestens einem der vorangegangenen Ansprüche,
**dadurch gekennzeichnet, dass**
die Lager (4) der Hilfswellen (10) Schräglager sind, insbesondere angestellte Schräglager.

5. Getriebe nach mindestens einem der vorangegangenen Ansprüche,
**dadurch gekennzeichnet, dass**
jede Hilfswelle (10) von einem jeweiligen Elektromotor antreibbar ist und die eintreibende Welle (9) von einem weiteren Elektromotor antreibbar ist.

6. Getriebe nach mindestens einem der vorangegangenen Ansprüche,
**dadurch gekennzeichnet, dass**
das Gehäuse (6) die Verzahnung jeder Hilfswelle (10) und das Hohlrad (2) gehäusebildend umgibt.

7. Getriebe nach mindestens einem der vorangegangenen Ansprüche,
**dadurch gekennzeichnet, dass**
die jeweilige Verzahnung der Hilfswellen (10) geteilt ausgeführt ist,
wobei axial zwischen den Teilen dieser jeweiligen Verzahnung die jeweilige Hilfswelle (10) und/oder das Hohlrad (2) eine Vertiefung, insbesondere eine Ringnut, aufweist.

## Claims

1. A gear unit with a housing (6) and a planetary gear stage, having at least one ring gear (2) with external gearing and internal gearing,
wherein one or more auxiliary shafts (10) are rotatably mounted on the housing (6) of the gear unit and have gearing or are connected in rotation-resistant manner to a toothed part,
wherein each gearing or each toothed part is engaged with the external gearing of the ring gear (2),
wherein the axis of the auxiliary shaft (10) or of each auxiliary shaft (10) is oriented parallel to the axis of the ring gear (2),
wherein an input shaft (9) of the gear unit is connected in rotation-resistant manner to a sun wheel (1) of the planetary gear stage,
wherein one or more planet wheels (12) of the planetary gear stage is/are engaged in each case on one hand with the internal gearing of the ring gear (2) and on the other hand with the sun wheel (1);
wherein the respective planet wheel (12) is rotatably mounted by means of bearings on a pin (11) which is connected, in particular plug-connected, to a pinion cage which acts as an output shaft,
wherein the sun wheel (1) is at least partially inserted into a bore (15) of the input shaft (9) and the sun wheel (1) has a gearing region which is engaged with internal gearing formed in the bore (15) to form a positive connection, which is resistant to rotation, between the sun wheel (1) and input shaft (9),
wherein the ring gear (2) is rotatably mounted on the pinion cage by means of bearings (5),
wherein the inner rings of these bearings (5) are placed on the pinion cage and the outer rings of these bearings (5) are inserted into the ring gear (2),
**characterised in that**
to attain a controlled tilting degree of freedom of the sun wheel (1), the end face (20), facing the input shaft (9), of the sun wheel (1) is embodied convexly curved,
**in that** to control the axial degree of freedom of the sun wheel (1) a bushing (14) is inserted in the bore (15) of the input shaft (9), the sun wheel (1) being passed through the bushing (14) and the bushing (14) being fastened in the input shaft (9) by means of screwing parts screwed into the bore (15),
and **in that** to control the radial degree of freedom of the sun wheel (1) an increasing clearance between the involute profile of the internal gearing of the input shaft (9) and the gearing region of the sun wheel (1) is provided.

2. A gear unit according to Claim 1,
**characterised in that**
the input shaft (9) is mounted by means of a first bearing which is received in the housing (6), and by means of a second bearing which is received in the pinion cage,
in particular with the second bearing being arranged in a bore of the planet carrier,
in particular with the inner ring of the first and the inner ring of the second bearing being placed on the input shaft (9).

3. A gear unit according to at least one of the preceding claims,
**characterised in that**
the pinion cage is rotatably mounted on both sides by bearings received in the housing (6).

4. A gear unit according to at least one of the preceding claims,
**characterised in that**
the bearings (4) of the auxiliary shafts (10) are angular contact bearings, in particular preloaded angular contact bearings.

5. A gear unit according to at least one of the preceding claims,
**characterised in that**
each auxiliary shaft (10) can be driven by a respective electric motor and the input shaft (9) can be driven by a further electric motor.

6. A gear unit according to at least one of the preceding claims,
**characterised in that**
the housing (6) surrounds the gearing of each auxiliary shaft (10) and the ring gear (2) in housing-forming manner.

7. A gear unit according to at least one of the preceding claims,
**characterised in that**
the respective gearing of the auxiliary shafts (10) is embodied to be split,
with the respective auxiliary shaft (10) and/or the ring gear (2) having a depression, in particular a ring groove, axially between the parts of this respective gearing.

## Revendications

1. Transmission pourvue d'un carter (6) et d'un étage d'engrenage planétaire, présentant au moins une couronne dentée (2) à denture extérieure et denture intérieure, dans laquelle un ou plusieurs arbres auxiliaires (10) sont montés rotatifs sur le carter (6) de la transmission et présentent une denture ou sont reliés de manière solidaire en rotation à une partie dentée,
dans laquelle chaque denture ou chaque partie dentée est en prise avec la denture extérieure de la couronne dentée (2),
dans laquelle l'axe de l'arbre auxiliaire (10) ou de chaque arbre auxiliaire (10) est orienté parallèlement à l'axe de la couronne dentée (2),
dans laquelle un arbre d'entrée (9) de la transmission est relié de manière solidaire en rotation à une roue solaire (1) de l'étage d'engrenage planétaire,
dans laquelle un ou plusieurs satellites (12) de l'étage d'engrenage planétaire sont chacun en prise d'une part avec la denture intérieure de la couronne dentée (2) et d'autre part avec la roue solaire (1) ;
dans laquelle le satellite respectif (12) est monté rotatif au moyen de paliers sur un boulon (11) qui est relié, en particulier par enfichage, à un porte-satellites agissant comme arbre de sortie,
dans laquelle la roue solaire (1) est enfichée au moins partiellement dans un alésage (15) de l'arbre d'entrée (9) et la roue solaire (1) présente une région dentée qui est en prise avec une denture intérieure réalisée dans l'alésage (15) pour former une liaison solidaire en rotation par complémentarité de forme entre la roue solaire (1) et l'arbre d'entrée (9),
dans laquelle la couronne dentée (2) est montée rotative sur le porte-satellites au moyen de paliers (5),
dans laquelle les bagues intérieures de ces paliers (5) sont montées sur le porte-satellites et les bagues extérieures de ces paliers (5) sont enfichées dans la couronne dentée (2),
**caractérisée en ce que**,
pour obtenir un degré de liberté d'inclinaison contrôlé de la roue solaire (1), la face frontale (20) de la roue solaire (1) tournée vers l'arbre d'entrée (9) est réalisée avec une courbure convexe,
**que**, pour contrôler le degré de liberté axial de la roue solaire (1), une douille (14) est insérée dans l'alésage (15) de l'arbre d'entrée (9), la roue solaire (1) étant passée à travers la douille (14) et la douille (14) étant fixée dans l'arbre d'entrée (9) par des parties filetées vissées dans l'alésage (15),
et que, pour contrôler le degré de liberté radial de la roue solaire (1), un espace libre croissant est prévu entre le profil en développante de cercle de la denture intérieure de l'arbre d'entrée (9) et la zone dentée de la roue solaire (1).

2. Transmission selon la revendication 1,
**caractérisée en ce que**
l'arbre d'entrée (9) est supporté au moyen d'un premier palier logé dans le carter (6) et au moyen d'un second palier logé dans le porte-satellites,
en particulier dans laquelle le second palier est disposé dans un alésage du porte-satellites,
en particulier dans laquelle la bague intérieure du premier palier et la bague intérieure du second palier sont montées sur l'arbre d'entrée (9).

3. Transmission selon au moins l'une des revendications précédentes,
**caractérisée en ce que**
le porte-satellites est monté rotatif des deux côtés par des paliers logés dans le carter (6).

4. Transmission selon au moins l'une des revendications précédentes,
**caractérisée en ce que**
les paliers (4) des arbres auxiliaires (10) sont des paliers à contact oblique, en particulier des paliers à contact oblique réglés.

5. Transmission selon au moins l'une des revendications précédentes,
**caractérisée en ce que**
chaque arbre auxiliaire (10) peut être entraîné par un moteur électrique respectif et l'arbre d'entrée (9) peut être entraîné par un autre moteur électrique.

6. Transmission selon au moins l'une des revendications précédentes,
**caractérisée en ce que**
le carter (6) entoure la denture de chaque arbre auxiliaire (10) et la couronne dentée (2) de manière à former un boîtier.

7. Transmission selon au moins l'une des revendications précédentes,
**caractérisée en ce que**
la denture respective des arbres auxiliaires (10) est réalisée en deux parties,
dans laquelle l'arbre auxiliaire respectif (10) et/ou la couronne dentée (2) présentent un creux, en particulier une rainure annulaire, axialement entre les parties de cette denture respective.
